## Europäisches Patentamt

## European Patent Office

## Office européen des brevets

(19)

(11) Numéro de publication: **0 227 515**
**B1**

(12) **FASCICULE DE BREVET EUROPÉEN**

(45) Date de publication du fascicule du brevet:
04.10.89

(51) Int. Cl.⁴: **H 05 G 1/60,** H 04 N 5/32

(21) Numéro de dépôt: **86402510.1**

(22) Date de dépôt: **12.11.86**

(54) Installation de radiologie à caméra vidéo à tube image.

(30) Priorité: **15.11.85 FR 8516938**

(43) Date de publication de la demande:
**01.07.87 Bulletin 87/27**

(45) Mention de la délivrance du brevet:
**04.10.89 Bulletin 89/40**

(84) Etats contractants désignés:
**DE GB NL**

(56) Documents cité:
**EP-A-0 096 940**
**FR-A-2 337 977**
**US-A-4 137 454**
**US-A-4 193 089**

**PATENTS ABSTRACTS OF JAPAN, vol. 9, no. 53 (E-301) 1776 , 7 mars 1985 & JP-A-59 193 677**
**PATENTS ABSTRACTS OF JAPAN, vol. 9, no. 43 (E-298) 1766 , 22 février 1985 & JP-A-59 183 580**
**PATENTS ABSTRACTS OF JAPAN, vol. 6, no. 107 (E-113) 985 , 17 juin 1982 & JP-A-57 38 598**

(73) Titulaire: **GENERAL ELECTRIC CGR S.A., 13, Square Max- Hymans, F-75015 Paris (FR)**

(72) Inventeur: **Ploix, Jean- Luc, THOMSON- CSF SCPI 19, avenue de Messine, F-75008 Paris (FR)**

(74) Mandataire: **Ballot, Paul Denis Jacques, Cabinet Ballot- Schmit 84, avenue Kléber, F-75116 Paris (FR)**

## Description

L'invention est relative à une installation de radiologie à caméra vidéo à tube image.

La surface sensible (ou cible) du tube d'une caméra vidéo est généralement considérée comme formée d'éléments capacitifs chargés par l'énergie lumineuse incidente et déchargés par un faisceau d'électrons de lecture, le courant de décharge constituant le signal de sortie de la caméra.

Avec une installation de radiologie à caméra de ce type on forme souvent des images qui se succèdent rapidement. De plus les images successives sont généralement combinées. Par exemple on effectue, pour la visualisation d'un organe, la soustraction des signaux correspondant à deux images successives dont l'une correspond à l'illumination d'un patient aux rayons X dans les conditions habituelles et dont l'autre est l'illumination du même patient mais avec un agent de contraste.

On a constaté que la qualité des images se succédant rapidement se dégrade et que, de plus, la combinaison de deux images successives n'est pas non plus d'une grande qualité.

L'invention permet de remédier à ces inconvénients.

Des moyens sont prévus pour réduire, sans l'annuler, l'intensité du faisceau d'électrons du tube image entre la lecture d'une image et la formation de la suivante sur la surface sensible. L'intensité du faisceau est, sans lecture, par exemple, environ dix fois plus faible que lors d'une lecture.

Avec cette disposition l'élément capacitif que constitue chaque élément de la surface sensible est déchargé de façon plus efficace après la lecture d'une image. De cette manière, lorsque cette surface sensible recevra la seconde image, chaque élément présentera une charge pratiquement indépendante de la charge qu'il avait accumulée lors de la réception de l'image précédente. Cette amélioration de la décharge de chaque élément capacitif résulte du fait que le faisceau d'électrons intervient comme une impédance de décharge et que cette impédance varie dans le même sens que l'intensité du faisceau à condition, cependant, que cette intensité reste supérieure à celle du signal à lire.

Lorsque deux images se succèdent rapidement la qualité de restitution de la seconde image est sensiblement améliorée et une combinaison, par exemple la soustraction, est aussi de meilleure qualité qu'avec l'état antérieur de la technique où le faisceau d'électrons ne changeait pas d'intensité.

De préférence le faisceau d'électrons présente une première intensité lors de la lecture de chaque image et une seconde intensité, plus faible que la première, en-dehors de ces périodes de lecture même, en état de veille. Dans ce cas, outre l'avantage mentionné ci-dessus, on augmente la durée de vie du tube-image.

Pour améliorer encore plus la lecture d'images successives il est également préférable de faire appel à un moyen pour illuminer la cible (surface sensible) du tube-image en-dehors des périodes où elle reçoit l'image afin que chaque élément capacitif contienne une charge minimum au-dessous de laquelle la charge serait non linéaire. L'énergie lumineuse pour conférer la charge minimum est appliquée dès la mise en route de la caméra, sans attendre son utilisation. De préférence l'énergie lumineuse est fournie sous forme d'impulsions avantageusement à la fréquence de balayage-trame ou à la fréquence de balayage-ligne. Dans une réalisation l'impulsion lumineuse est fournie pendant la période de suppression trame.

D'autres caractéristiques et avantages de l'invention apparaîtront avec la description de certains de ses modes de réalisation, celle-ci étant effectuée en se référant aux dessins ci-annexés sur lesquels:

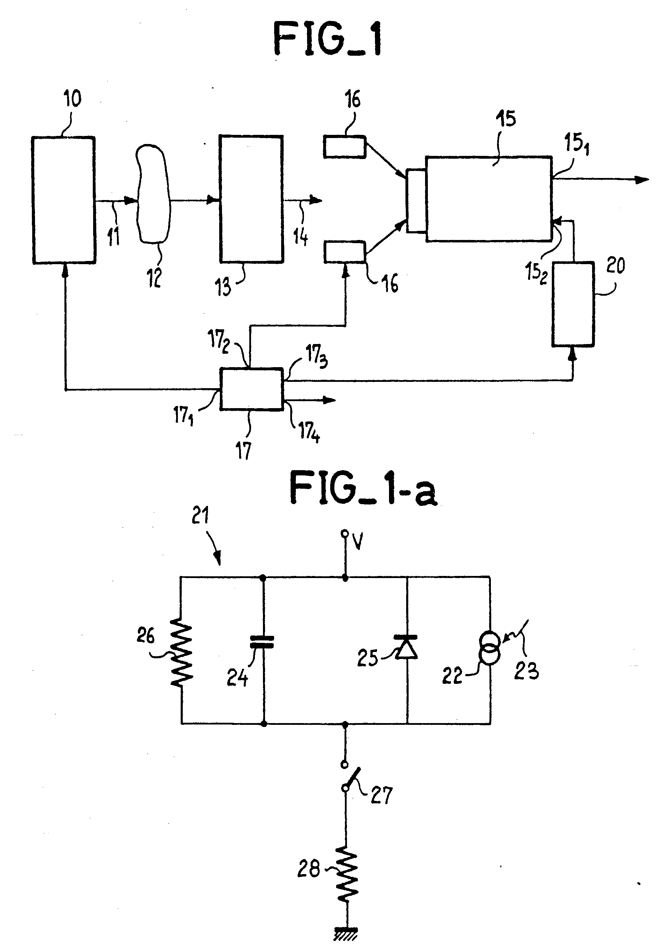

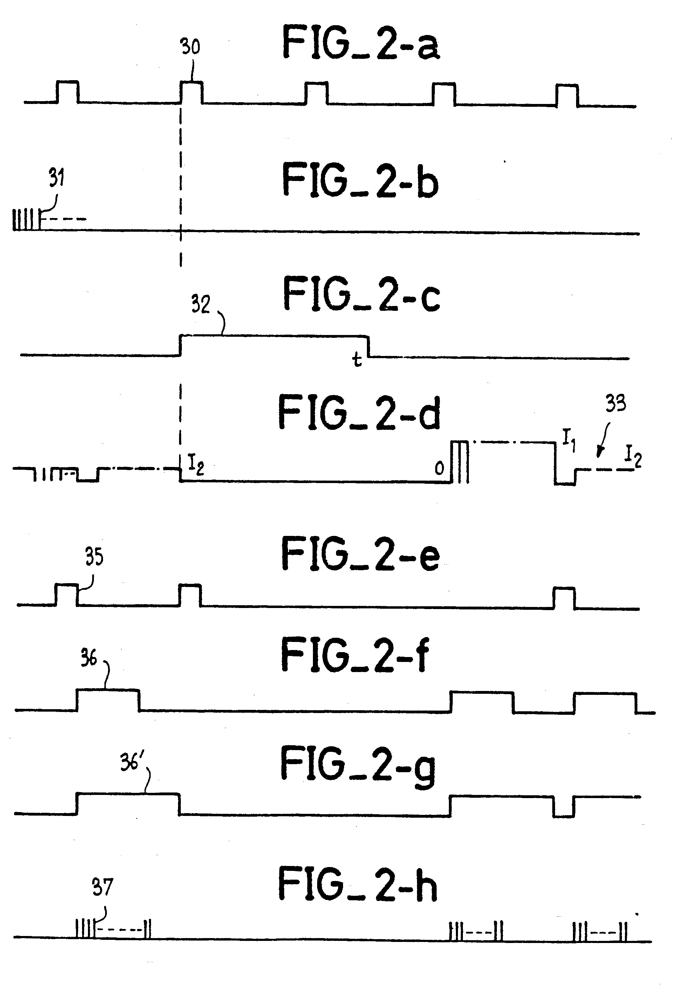

- la figure 1 est un schéma d'un appareil selon l'invention,
- la figure $1_a$ est un schéma de circuit équivalent à un élément de surface sensible et à un faisceau d'électrons de tube analyseur de caméra vidéo, et
- les figures $2_a$ $2_h$ sont des diagrammes illustrant le fonctionnement de l'appareil de l'invention selon plusieurs modes de réalisation.

L'installation de radiologie représentée sur la figure comporte un générateur de rayons X 10 dont le rayonnement 11 traverse le patient à examiner 12 pour atteindre un convertisseur 13 transformant l'image aux rayons X en une image en rayonnement visible 14 qui est transformée en signal vidéocomposite par une caméra vidéo 15 à tube analyseur.

Le signal vidéocomposite sur la sortie $15_1$ de la caméra 15 est numérisé et introduit dans une mémoire (non représentée). Des moyens de calcul, également non montrés, permettent d'effectuer, de façon classique, un traitement sur deux ou plusieurs images successives et l'image combinée est visualisée. Par exemple une première image mise en mémoire correspond au patient auquel on n'a pas encore injecté de produit de contraste et la seconde image correspond à ce même patient après injection de ce produit; le traitement consiste à effectuer la soustraction entre ces deux images successives.

Le signal fourni par la caméra 15 étant de faible valeur pour les faibles luminances, des diodes électroluminescentes 16 sont prévues pour éclairer la surface sensible du tube d'une façon qui sera décrite plus loin en relation avec les diagrammes des figures $2_a$ à $2_h$ afin que l'énergie lumineuse fournie par ces diodes électroluminescentes 16 se superpose à l'énergie lumineuse de l'image fournie par le convertisseur 13.

Un circuit de commande et de synchronisation 17 commande le fonctionnement du générateur 10, des diodes électroluminescentes 16, de la caméra 15 et des moyens de traitement de signal.

A cet effet il comporte des sorties, respectivement $17_1$, $17_2$, $17_3$ et $17_4$, reliées à des entrées correspondantes des dispositifs commandés.

Pour la commande de la caméra 15, la sortie $17_3$ du dispositif 17 est reliée à l'entrée $15_2$ de la caméra 15, sur laquelle est appliqué un potentiel qui est celui du wehnelt (grille $G_1$) du tube, par l'intermédiaire d'un générateur de tensions 20 permettant que l'intensité du faisceau d'électrons de lecture de la caméra puisse prendre, en plus de la valeur nulle, deux valeurs, à savoir une première intensité $I_1$ pour la lecture d'une image et une seconde intensité $I_2$, sensiblement plus faible que la première, en-dehors des périodes de lecture de l'image. Dans un exemple l'intensité $I_1$ est de l'ordre de 2000 nanoampères et l'intensité $I_2$ de l'ordre de 200 nanoampères.

La surface sensible de la caméra 15 est considérée comme composée d'un ensemble d'éléments dont chacun peut être assimilé au circuit 21 représenté sur la figure $1_a$. Ce circuit 21 comporte un générateur de courant 22 fournissant un courant dont l'intensité est fonction de l'énergie lumineuse 23 reçue. Ce générateur de courant 22 charge un condensateur 24. En parallèle sur le condensateur 24 se trouve, d'une part, une diode 25 et, d'autre part, une résistance de fuite 26 de très grande valeur. Ainsi la charge du condensateur 24 représente l'énergie lumineuse reçue par l'élément.

Lors du passage du faisceau d'électrons de lecture le condensateur 24 se décharge; le courant de décharge représente la charge dudit condensateur et donc l'énergie lumineuse reçue. Sur la figure $1_a$ le circuit de décharge a été représenté par un interrupteur 27 connecté à l'anode de la diode 25, et qui est fermé lorsque le faisceau d'électrons atteint l'élément correspondant, et par une impédance en série 28 dont la valeur varie avec l'intensité du faisceau d'électrons. Cette impédance 28 est disposée entre la masse et l'interrupteur 27. Par ailleurs la cathode de la diode 25 est reliée à une source de potentiel V.

La figure $2_a$ représente les impulsions 30 de suppression (ou retour) trame et la figure $2_b$ les impulsions 31 de suppression ligne de la caméra 15. Grâce au circuit 17, le générateur 10 est commandé pour que le rayonnement X 11 soit émis à partir du début d'une impulsion de retour trame 30. L'impulsion 32 de commande du générateur 10 est représentée sur la figure $2_c$. La fin de l'impulsion 32, c'est-à-dire la fin de l'émission de rayonnement X, dépend de la dose de rayonnement X nécessaire pour obtenir une bonne image. Ainsi l'instant t de fin de l'impulsion 32 est indépendant de la fréquence trame.

Le diagramme de la figure $2_d$ représente la variation en fonction du temps de l'intensité du faisceau d'électrons de lecture de la caméra 15. Cette intensité I est nulle lors des périodes de retour ligne, des périodes de retour trame et pendant la (ou les) trame(s) au cours de laquelle (ou desquelles) la surface sensible du tube de la caméra 15 reçoit une image. Ainsi, dans l'exemple représenté sur la figure $2_c$, le rayonnement X est produit pendant une trame et une fraction de la trame suivante; dans ce cas le faisceau de lecture a une intensité nulle sur une période de deux trames, celles pendant lesquelles la surface sensible reçoit une image à mémoriser.

Avant la formation de l'image (c'est-à-dire avant l'impulsion 32) le faisceau d'électrons a une intensité $I_2$; cette intensité tombe à zéro quand apparaît l'impulsion de commande 32 et cette intensité prend une valeur $I_1$, sensiblement supérieure à $I_2$, après l'impulsion de suppression trame suivant la dernière trame au cours de laquelle s'est présenté le signal 32. Le faisceau garde cette intensité $I_1$ au cours d'une trame complète. La lecture de l'image formée sur la surface sensible de la caméra 15 s'effectue pendant cette trame. Lors de la trame suivante 33 le faisceau d'électrons reprend l'intensité $I_2$.

Au cours de la trame 33 suivant la lecture, la faible intensité $I_2$ du faisceau d'électrons permet de décharger les condensateurs 24 de façon sensiblement plus efficace que si le faisceau gardait la forte intensité $I_1$. Ainsi, pour l'image suivante, la surface sensible de la caméra ne gardera pratiquement aucune trace de l'image précédente. Autrement dit la diminution de l'intensité du faisceau d'électrons permet de décharger rapidement les condensateurs 24 après la lecture d'une image mais avant la formation de la suivante, ce qui est particulièrement intéressant pour une installation de radiologie destinée à former des images se succédant rapidement.

Les diodes électroluminescentes du dispositif 16 sont, dans les modes de réalisation décrits, commandées de façon impulsionnelle.

Dans une première réalisation (figure $2_e$) les impulsions lumineuses 35 ne sont engendrées que pendant les périodes de retour trame. Toutefois ces impulsions lumineuses ne sont pas appliquées lors des périodes de lecture (lorsque l'intensité du faisceau d'électrons est $I_1$).

Dans une autre réalisation (figure $2_f$) les impulsions lumineuses 36 sont appliquées pendant une fraction de chaque trame. En variante (figure $2_g$) les impulsions lumineuses 36' sont appliquées pendant toute la durée des trames, sauf pendant les périodes de retour trame.

Selon une autre réalisation (figure $2_h$) les impulsions lumineuses 37 ne sont appliquées que pendant les périodes de retour ligne.

Dans le cas de la figure $2_f$ la durée de l'impulsion lumineuse 36 à chaque trame est fonction de l'énergie lumineuse minimum qu'il faut appliquer à la surface sensible du tube de la caméra 15 pour échapper à la zone de non linéarité du générateur 22. Dans le cas de la figure $2_h$, le nombre d'impulsions lumineuses 37 au cours de chaque trame est fonction de l'énergie lumineuse minimum à appliquer pour échapper à ladite zone de non linéarité. Dans le cas des figures $2_e$ et $2_g$ cette énergie minimum peut être réglée uniquement par l'amplitude des impulsions 35 et 36' respectivement.

Il est à noter que les impulsions lumineuses sont appliquées dès la mise sous tension de l'installation. De même dès la mise sous tension de l'installation le faisceau d'électrons de la caméra prend la valeur $I_2$. De façon plus générale en état de veille le faisceau d'électrons a l'intensité $I_2$; de même on produit des impulsions lumineuses même en état de veille.

**Revendications**

1. Installation de radiologie à caméra vidéo (15) du type à tube analyseur d'images et destinée à produire des images se succédant rapidement, caractérisée par des moyens tels que le faisceau d'électrons du tube a, lors de la lecture d'une image sur la surface sensible de ce tube, une première intensité ($I_1$) et, entre la lecture d'une image et le début de l'inscription de la suivante, une seconde intensité ($I_2$), non nulle, sensiblement inférieure à la première.

2. Installation selon la revendication 1, caractérisée en ce que le rapport entre les deux intensités est de l'ordre de dix.

3. Installation selon la revendication 1 ou 2, caractérisée en ce que le faisceau d'électrons du tube analyseur de la caméra (15) a la seconde intensité ($I_2$) pendant toutes les périodes de trame à l'exception de celles au cours de laquelle (desquelles) s'effectue la lecture et de celle(s) au cours de laquelle (desquelles) l'image est formée sur la surface sensible de ce tube.

4. Installation selon l'une quelconque des revendications 1 à 3, caractérisée en ce qu'elle comporte un circuit de commande (17, 20) agissant sur la tension de wehnelt du tube de la caméra (15) afin de faire varier l'intensité du faisceau d'électrons.

5. Installation selon l'une quelconque des revendications précédentes, caractérisée en ce qu'un moyen (16) est prévu pour appliquer sur la surface sensible du tube analyseur d'images de la caméra (15) une énergie lumineuse minimum afin que, lors de la lecture à l'aide du faisceau d'électrons, chaque élément de cette surface présente une charge minimum.

6. Installation selon la revendication 5, caractérisée en ce que l'énergie lumineuse minimum est appliquée sous forme d'impulsions.

7. Installation selon la revendication 6, caractérisée en ce que les impulsions sont à la fréquence trame.

8. Installation selon la revendication 7, caractérisée en ce que la valeur de l'énergie lumineuse minimum à appliquer est réglée par la durée de l'impulsion lumineuse (36) à chaque trame.

9. Installation selon la revendication 6, caractérisée en ce qu'à chaque trame les impulsions lumineuses sont à la fréquence ligne.

10. Installation selon la revendication 9, caractérisée en ce qu'à chaque trame la valeur de l'énergie lumineuse minimum est réglée par le nombre d'impulsions lumineuses (37).

11. Installation selon l'une quelconque des revendications précédentes, caractérisée en ce qu'elle comporte des moyens pour combiner, notamment soustraire, deux images successives.

**Patentansprüche**

1. Radiologieanlage mit einer Videokamera (15) vom Typ mit Bildanalyseröhre, welche dazu bestimmt ist, schnell aufeinanderfolgende Bilder zu erzeugen, durch solche Mittel gekennzeichnet, daß der Elektronenstrahl der Röhre bei dem Auslesen eines Bildes auf der empfindlichen Fläche dieser Röhre eine erste Intensität ($I_1$) und zwischen dem Auslesen eines Bildes und dem Anfang des Einschreibens des folgenden Bildes eine nicht verschwindende Intensität ($I_2$), die deutlich kleiner als die erste Intensität ist, aufweist.

2. Anlage nach Anspruch 1, dadurch gekennzeichnet, daß das Verhältnis zwischen beiden Intensitäten in der Größenordnung von zehn liegt.

3. Anlage nach Anspruch 1 oder 2, dadurch gekennzeichnet, daß der Elektronenstrahl der Analyseröhre der Kamera (15) die zweite Intensität ($I_2$) während allen Bildrasterperioden, ausgenommen diejenige(n) bei welcher (welchen) das Auslesen erfolgt, und diejenige(n), bei welcher (welchen) das Bild auf der empfindlichen Fläche dieser Röhre gebildet ist, aufweist.

4. Anlage nach einem der Ansprüche 1 bis 3, dadurch gekennzeichnet, daß sie eine Steuerschaltung (17, 20) umfaßt, welche auf die Wehnelt-Spannung der Röhre der Kamera (15) einwirkt, damit die Intensität des Elektronenstrahls verändert wird.

5. Anlage nach einem der vorstehenden Ansprüche, dadurch gekennzeichnet, daß ein Mittel (16) vorgesehen ist, um auf die empfindliche Oberfläche der Bildanalyseröhre der Kamera (15) eine minimale Lichtenergie aufzubringen, damit beim Auslesen mittels des Elektronenstrahls jedes Element dieser Oberfläche eine minimale Ladung aufweist.

6. Anlage nach Anspruch 5, dadurch gekennzeichnet, daß die minimale Lichtenergie in Form von Impulsen aufgebracht wird.

7. Anlage nach Anspruch 6, dadurch gekennzeichnet, daß die Impulse bildfrequent sind.

8. Anlage nach Anspruch 7, dadurch gekennzeichnet, daß der Wert der aufzubringenden minimalen Lichtenergie über die Dauer des Lichtimpulses (36) in jedem Bildraster eingestellt wird.

9. Anlage nach Anspruch 6, dadurch gekennzeichnet, daß in jedem Bildraster die Lichtimpulse zeilenfrequent sind.

10. Anlage nach Anspruch 9, dadurch gekennzeichnet, daß in jedem Bildraster der Wert der minimalen Lichtenergie über die Anzahl der Lichtimpulse (37) eingestellt wird.

11. Anlage nach einem der vorstehenden Ansprüche, dadurch gekennzeichnet, daß sie Mittel zum Kombinieren und insbesondere zum Subtrahieren zweier aufeinanderfolgender Bilder umfaßt.

## Claims

1. A radiological installation with a video camera (15) of the type having an image analyzing tube and adapted to produce images in rapid succession, characterized by means such that during the reading of an image on the sensitive surface of the tube, the electron beam of the tube has a first intensity ($I_1$) and, between the reading of an image and the starting of writing of the following one, a second intensity ($I_2$), not equal to zero, substantially less than the first intensity.

2. The installation in accordance with claim 1, characterized in that the relationship between the two intensities is of the order of ten.

3. The installation as claimed in claim 1 or claim 2, characterized in that the beam of electrons of the analyzing tube of the camera (15) has the second intensity ($I_2$) during all the periods of the frame with the exception of those in the course of which reading takes place and of those in course of which the image is formed on the sensitive surface of this tube.

4. The installation as claimed in any one of the claims 1 through 3, characterized in that it comprises a control circuit (17 and 20) acting on the wehnelt voltage of the tube of the camera (15) in order to cause a variation in the intensity of the beam of electrons.

5. The installation as claimed in any one of the preceding claims, characterized in that a means (16) is provided in order to apply a minimum luminous energy to the sensitive surface of the image analyzing tube of the camera (15) such that at the time of reading with the aid of the beam of electrons each element of this surface has a minimum charge.

6. The installation as claimed in claim 5, characterized in that the minimum luminous energy is applied in the form of pulses.

7. The installation as claimed in claim 6, characterized in that the pulses are at the frame frequency.

8. The installation as claimed in claim 7, characterized in that the value of the minimum luminous energy to be applied is regulated in accordance with the duration of the luminous pulse (36) in each frame.

9. The installation as claimed in claim 6, characterized in that the during each frame the luminous pulses are at the line frequency.

10. The installation as claimed in claim 9, characterized in that in each frame the value of the minimum luminous energy is regulated by the number of luminous pulses (37).

11. The installation as claimed in any one of the preceding claims, characterized in that it comprises means in order to combine, and more particularly to subtract from each other, two successive images.

# FIG_1

# FIG_1-a

# FIG_2-a

30

# FIG_2-b

31

# FIG_2-c

32

t

# FIG_2-d

33

$I_2$

0

$I_1$

$I_2$

# FIG_2-e

35

# FIG_2-f

36

# FIG_2-g

36'

# FIG_2-h

37